# FASCICULE DE BREVET EUROPEEN

(11) **EP 1 549 774 B1**
(45) Date de publication et mention de la délivrance du brevet: **05.12.2007**
(21) Numéro de dépôt: 03758272.3
(22) Date de dépôt: 25.08.2003
(51) Int. Cl.: C13K 5/00, A23C 9/142, A23C 9/146, C13D 3/14

(54) **PROCEDE DE PRODUCTION DE LACTOSE A PARTIR DE LACTOSERUM OU D'UN PERMEAT RESULTANT DE L'ULTRAFILTRATION DE LACTOSERUM**
VERFAHREN ZUR HERSTELLUNG VON LAKTOSE AUS MOLKE ODER MOLKENULTRAFILTRATIONPERMEAT
METHOD FOR PRODUCING LACTOSE FROM LACTOSERUM OR A PERMEATE DERIVED FROM LACTOSERUM ULTRAFILTRATION

(30) Priorité: 06.09.2002 FR 0211046
(43) Date de publication de la demande: 06.07.2005
(73) Titulaire: APPLEXION, 78680 Epone (FR)
(72) Inventeur: THEOLEYRE, Marc-André, F-75020 Paris (FR)
(74) Mandataire: Kedinger, Jean-Paul
(86) Numéro de dépôt international: PCT/FR2003/002574
(87) Numéro de publication internationale: WO 2004/022789

(56) Documents cités:
- EP-A- 0 249 368
- WO-A-95/30482
- WO-A-99/04903
- US-A- 2 555 211
- US-A- 2 778 750

## Description

La présente invention a pour objet un procédé de production de lactose à partir de lactosérum ou d'un perméat résultant de l'ultrafiltration de lactosérum, ce lactosérum et perméat comprenant des cations monovalents Na⁺ et K⁺, des anions monovalents Cl⁻, des cations polyvalents Ca²⁺ et Mg²⁺ et des anions polyvalents minéraux tels que des anions phosphate et/ou des anions d'acides organiques aptes à former des complexes avec lesdits cations polyvalents, tels que lactate et citrate.

Dans le cadre d'un tel procédé de production de lactose, il est habituellement envisagé une opération de concentration avant une opération de cristallisation. Cependant, la présence dans le lactosérum ou le perméat d'ultrafiltration de lactosérum de phosphate de calcium et/ou de magnésium est à l'origine de précipitations dans les évaporateurs utilisés pour ladite concentration ; ceci oblige un nettoyage fréquent de ces évaporateurs. En outre, la précipitation de phosphate de calcium et/ou de magnésium durant la cristallisation a un effet néfaste sur cette dernière.

Pour remédier à ces difficultés, il a été proposé dans la technique antérieure de limiter les difficultés rappelées ci-dessus, en ajustant le pH du lactosérum ou du perméat d'ultrafiltration de manière à précipiter du phosphate de calcium et/ou de magnésium puis de séparer le sel précipité par centrifugation.

Cette technique est cependant coûteuse et le rendement de décalcification est limité. WO9904903 décrit un procédé de production de lactose à partir de lactosérum comprenant la substitution de cations polyvalents par des cations monovalent avant d'effectuer la chromatographie.

L'idée à la base de la présente invention est de mettre en oeuvre une opération de cristallisation sur un lactosérum ou perméat d'ultrafiltration de lactosérum, traité par des résines échangeuses d'ions pour l'appauvrir en cations polyvalents et éventuellement en anions polyvalents minéraux et/ou anions d'acides organiques voire le débarrasser sensiblement totalement de ces cations et/ou anions, tout en produisant des effluents dont la nature permet la régénération desdites résines sans apport extérieur de produits chimiques.

Ainsi, la présente invention a pour objet un procédé conforme au premier paragraphe de cette description et qui se caractérise en ce qu'il comprend les opérations :
(a) de substitution d'une partie au moins des cations polyvalents du lactosérum ou perméat par des cations métalliques monovalents tels que Na⁺ et/ou K⁺, pour obtenir un lactosérum ou perméat appauvri en cations polyvalents,
(b) de substitution d'une partie au moins des anions polyvalents minéraux et anions d'acides organiques du lactosérum ou perméat par des anions monovalents tels que Cl⁻ non aptes à former des complexes avec les cations polyvalents, cette opération (b) étant effectuée soit simultanément à l'opération (a) ci-dessus, auquel cas il en résulte un lactosérum ou un perméat appauvri en anions polyvalents minéraux, en anions d'acides organiques et en cations polyvalents, soit avant ladite opération (a) auquel cas il en résulte un lactosérum ou un perméat appauvri en anions polyvalents minéraux et anions d'acides organiques, et
(c) de cristallisation dudit lactosérum ou perméat appauvri en anions polyvalents minéraux, en anions d'acides organiques et en cations polyvalents, pour obtenir du lactose cristallisé et des eaux-mères enrichies en cations monovalents métalliques, cette cristallisation étant précédée, si besoin est, d'une opération de concentration au degré voulu dudit lactosérum ou perméat.

L'opération (a) ci-dessus livre un lactosérum ou perméat fortement enrichi en cations monovalents métalliques qui ont l'avantage d'avoir aucune incidence néfaste sur l'opération de concentration éventuelle ni sur l'opération (c) de cristallisation ultérieure.

Quant à l'opération (c), elle produit du lactose cristallisé et des eaux-mères contenant la très grande majorité des cations monovalents métalliques contenus dans le lactosérum ou perméat issu de l'opération (a).

Il a en effet été constaté qu'un tel remplacement d'une partie au moins des anions aptes à former des complexes avec les cations Ca²⁺ et Mg²⁺, par des anions monovalents non aptes à former de tels complexes, tels que Cl⁻, permettait d'améliorer grandement les rendements de décalcification.

On comprendra que par ce remplacement on détruit plus ou moins lesdits complexes, ce qui augmente la disponibilité des cations polyvalents (Ca²⁺, Mg²⁺) qui peuvent de ce fait être remplacés plus facilement par les cations monovalents métalliques.

De préférence, le procédé selon l'invention comprend en outre l'opération :
(d) de chromatographie d'une partie au moins des eaux-mères obtenues lors de l'opération (c) de cristallisation, pour produire une fraction enrichie en lactose et un raffinat enrichi en cations métalliques monovalents et éventuellement en anions monovalents.

Selon un mode de réalisation, l'opération (a) de substitution des cations polyvalents comprend de préférence le traitement du lactosérum ou du perméat avec une résine cationique dont le contre-ion est un cation monovalent métallique.

Par ailleurs, l'opération (b) de substitution des anions polyvalents minéraux et anions d'acides organiques comprend de préférence le traitement du lactosérum ou du perméat avec une résine anionique dont le contre-ion est un anion monovalent non apte à former des complexes avec les cations polyvalents.

On précisera que les résines susmentionnées sont de préférence des résines anionique forte et cationique forte.

Par ailleurs, le cation monovalent constituant le contre-ion de la résine cationique est de préférence le cation Na⁺ et/ou K⁺ et l'anion monovalent constituant le contre-ion de la résine anionique est de préférence l'anion Cl⁻.

Selon une autre caractéristique du procédé selon l'invention, celui-ci peut en outre comprendre l'opération :
(e) de régénération de la résine cationique et/ou de la résine anionique susmentionnées,
cette régénération étant avantageusement effectuée à l'aide d'une fraction des eaux-mères produites lors de l'opération (c) de cristallisation et/ou à l'aide d'une fraction au moins du raffinat produit lors de l'opération (d) de chromatographie.

On ajoutera que cette régénération peut être effectuée en série ou en parallèle sur la résine anionique et la résine cationique.

On ajoutera encore que suivant la composition ionique du lactosérum ou du perméat, un ajustement du pH du liquide de régénération, notamment desdites eaux-mères, peut être nécessaire pour éviter tout risque de précipitation de phosphate de calcium ou de magnésium. Ainsi, cet ajustement peut de préférence être effectué au moyen d'acide phosphorique ou d'acide chlorhydrique.

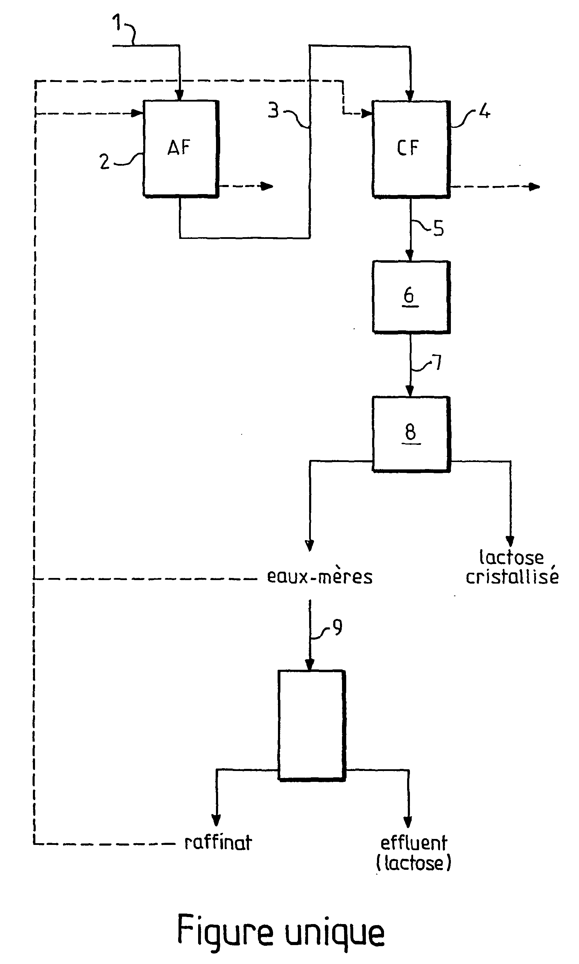

La présente invention est illustrée ci-après, de manière non limitative, par la description d'un exemple de préparation de lactose, faite en référence à la figure unique qui est la représentation schématique d'une installation pour la mise en oeuvre du procédé selon l'invention.

Le produit de départ est dans l'exemple choisi, un perméat obtenu par ultrafiltration d'un lactosérum. Un tel perméat comprend pour l'essentiel du lactose, des acides organiques et des minéraux (en particulier des cations, Na⁺, K⁺, Ca²⁺, Mg²⁺, des anions Cl⁻ et phosphate et des anions d'acides organiques capables de former des complexes avec les cations Ca²⁺ et Mg²⁺, tels que citrate et lactate).

Ce perméat est amené par un conduit 1 à l'entrée d'une colonne 2 garnie d'une résine anionique forte (AF), puis de la sortie de cette colonne 2 par un conduit 3 à l'entrée d'une colonne 4 garnie d'une résine cationique forte (CF).

La résine cationique forte est sous la forme Na⁺ ou K⁺, c'est-à-dire que son contre-ion est l'ion Na⁺ ou K⁺ ; la résine anionique forte est sous la forme Cl⁻, c'est-à-dire que son contre-ion est l'ion Cl⁻.

On notera qu'en variante, ces deux résines pourraient être utilisées en mélange, auquel cas une seule colonne serait suffisante.

Lors du passage du perméat sur la résine anionique, il échange ses anions polyvalents minéraux (phosphate) et anions d'acides organiques (lactate, citrate) avec les ions Cl⁻ de la résine ; lors de son passage sur la résine cationique, il échange ses cations polyvalents (Ca²⁺, Mg²⁺) avec les ions Na⁺ ou K⁺ de la résine.

Le perméat se trouve ainsi débarrassé d'une partie substantielle de ses cations et anions polyvalents minéraux et de ses anions d'acides organiques, lesquels cations et anions ont été remplacés par des cations et anions monovalents ; ce perméat contient donc pour l'essentiel du lactose, des ions Na⁺, K⁺ et Cl⁻, des cations Ca²⁺, Mg²⁺ résiduels, des anions phosphate résiduels et des anions d'acides organiques résiduels.

La solution aqueuse issue de la colonne 4 est ensuite amenée par un conduit 5 dans une unité d'évaporation 6 dont la fonction est de concentrer ce perméat.

Le perméat concentré issu de l'unité 6 est ensuite amené par un conduit 7 dans une unité de cristallisation 8 où on assiste à la cristallisation de lactose que l'on sépare des eaux-mères.

Ces eaux-mères très riches en ions Na⁺, K⁺ et Cl⁻ peuvent pour leur part être utilisées en totalité ou en partie pour la régénération des résines garnissant respectivement les colonnes 2 et 4 ; cette régénération est de préférence effectuée en parallèle sur ces résines, avec dans ce cas ajout aux eaux-mères d'un appoint de NaCl (voir circuit en traits pointillés sur la figure annexée).

Enfin, en variante, une partie ou la totalité desdites eaux-mères peuvent être amenées par un conduit 9 en tête d'une colonne de chromatographie 10 de laquelle est issus d'une part, une solution aqueuse enrichie en lactose résiduel et d'autre part, un raffinat enrichi en anions et cations monovalents Na⁺, K⁺ et Cl⁻.

Ce raffinat peut lui également être mis en oeuvre pour la régénération des résines des colonnes 2 et 4 (voir circuit en traits pointillés sur la figure annexée).

Afin de bien montrer l'intérêt du procédé selon la présente invention, celui-ci a été comparé à la technique connue d'adoucissement par précipitation et centrifugation (décantation centrifuge), dans le cadre de la préparation de lactose à partir d'un perméat de lactosérum doux, obtenu par ultrafiltration d'un lactosérum.

Deux variantes ont été utilisées pour le procédé selon l'invention, à savoir :
- utilisation d'une résine cationique seule (IRA 252 de la société américaine Rohm and Haas) = système CF ;
- utilisation d'une résine anionique (IRA 458 de la société américaine Rohm and Haas) suivie en série d'une résine cationique (SR1L Na de la société Rohm and Haas) = système AF - CF.

Pour ces deux variantes, la régénération des résines est réalisée au moyen des eaux-mères de la cristallisation du lactose en respectant les rapports de volume : production de 1 volume d'eaux-mères à 27 % de matière sèche pour 16 volumes de perméat de lactosérum à 5,7 % de matière sèche.

La composition ionique du perméat est comme suit :

| **matière sèche** | **Ca²⁺ + Mg²⁺** | **Na⁺ + K⁺** | **PO₄³⁻** | **Cl⁻** |
|---|---|---|---|---|
| **%** | **(méq./l)** | **(méq./l)** | **(méq./l)** | **(méq./l)** |
| 5,7 | 25 | 52 | 38 | 31 |

### Performances des systèmes

| | **CF** | **AF-CF** | **Décantation centrifuge** |
|---|---|---|---|
| Ca²⁺ + Mg²⁺ dans le perméat à traiter (méq./l) | 25 | 25 | 25 |
| Ca²⁺ + Mg²⁺ dans l'effluent sortant (méq./l) | 4,2 | 1,2 | 6,3 |
| % d'élimination de Ca²⁺ + Mg²⁺ | 83 | 95 | 75 |
| Capacité cationique (éq./lr) | 0,60 | 0,75 | |

Le perméat ainsi adouci est critallisé pour produire du lactose cristallisé et des eaux-mères contenant l'essentiel des impuretés dont les sels à ions monovalents.

Ces eaux-mères ont été clarifiées par décantation et/ou filtration avant leur utilisation comme régénérant des résines. Leur pH ayant été ajusté à 5, il n'a pas été observé de précipitation dans les résines.

## Revendications

1. Procédé de production de lactose à partir de lactosérum ou d'un perméat résultant de l'ultrafiltration de lactosérum, ce lactosérum et perméat comprenant des cations monovalents Na⁺ et K⁺, des anions monovalents Cl⁻, des cations polyvalents Ca²⁺ et Mg²⁺ et des anions polyvalents minéraux tels que des anions phosphate et/ou des anions d'acides organiques aptes à former des complexes avec lesdits cations polyvalents, tels que lactate et citrate, **caractérisé en ce qu'**il comprend les opérations :
(a) de substitution d'une partie au moins desdits cations polyvalents du lactosérum ou perméat par des cations métalliques monovalents, pour obtenir un lactosérum ou un perméat appauvri en cations polyvalents,
(b) de substitution d'une partie au moins des anions polyvalents minéraux et anions d'acides organiques du lactosérum ou perméat par des anions monovalents non aptes à former des complexes avec les cations polyvalents, cette opération (b) étant effectuée soit simultanément à l'opération (a) auquel cas il en résulte un lactosérum ou un perméat appauvri en anions polyvalents minéraux, en anions d'acides organiques et en cations polyvalents, soit avant l'opération (a) auquel cas il en résulte un lactosérum ou un perméat appauvri en anions polyvalents minéraux et anions d'acides organiques, et
(c) de cristallisation dudit lactosérum ou perméat résultant des opérations précédentes, et appauvri en anions polyvalents minéraux, en anions d'acides organiques et en cations polyvalents, pour obtenir du lactose cristallisé et des eaux-mères enrichies en cations métalliques monovalents, cette cristallisation étant précédée, si besoin est, d'une opération de concentration au degré voulu dudit lactosérum ou perméat.

2. Procédé selon la revendication 1, **caractérisé en ce qu'**il comprend en outre une opération :
(d) de chromatographie d'une partie au moins des eaux-mères obtenues lors de l'opération (c) de cristallisation, pour produire une fraction enrichie en lactose et un raffinat enrichi en cations métalliques monovalents et éventuellement en anions monovalents.

3. Procédé selon l'une des revendications précédentes, **caractérisé en ce que** l'opération (a) de substitution des cations polyvalents comprend le traitement du lactosérum ou perméat avec une résine cationique dont le contre-ion est un cation monovalent métallique.

4. Procédé selon l'une des revendications précédentes, **caractérisé en ce que** l'opération (b) de substitution des anions polyvalents minéraux et anions d'acides organiques comprend le traitement du lactosérum ou perméat avec une résine anionique dont le contre-ion est un anion monovalent non apte à former des complexes avec les cations polyvalents.

5. Procédé selon la revendication 3, **caractérisé en ce que** le cation métallique monovalent constituant le contre-ion de la résine cationique est le cation Na⁺ ou K⁺.

6. Procédé selon la revendication 4 ou 5, **caractérisé en ce que** l'anion monovalent constituant le contre-ion de la résine anionique est l'anion Cl⁻.

7. Procédé selon la revendication 3, 4, 5 ou 6, **caractérisé en ce qu'**il comprend en outre l'opération :
(e) de régénération de la résine cationique et /ou de la résine anionique.

8. Procédé selon la revendication 7, **caractérisé en ce que** l'opération (e) de régénération est effectuée à l'aide d'une fraction des eaux-mères produites lors de l'opération (c) de cristallisation.

9. Procédé selon la revendication 7 ou 8, **caractérisé en ce que** l'opération (e) de régénération est effectuée à l'aide du raffinat produit lors de l'opération (d) de chromatographie.

10. Procédé selon l'une quelconque des revendications 7 à 9, **caractérisé en ce que** l'opération (e) de régénération est effectuée en série ou en parallèle sur la résine anionique et la résine cationique.

## Claims

1. Production method of lactose from whey or a permeate resulting from the ultrafiltration of whey, this whey and permeate comprising monovalent Na⁺ and K⁺ cations, monovalent Cl⁻ anions, multivalent Ca²⁺ and Mg²⁺ cations and multivalent inorganic anions, such as phosphate anions and/or organic acid anions able to form complexes with said multivalent cations, such as lactate and citrate, **characterized in that** it comprises the operations:
(a) of replacement of at least a part of said multivalent cations of the whey or permeate by monovalent metal cations, in order to obtain a whey or permeate depleted in multivalent cations,
(b) of replacement of at least a part of the multivalent inorganic anions and organic acid anions of the whey or permeate by monovalent anions non-able to form complexes with the multivalent cations, this operation (b) being performed either simultaneously to operation (a), in which case a whey or permeate depleted in multivalent inorganic anions, in organic acid anions and in multivalent cations is obtained, or before operation (a), in which case a whey or permeate depleted in multivalent inorganic anions and organic acid anions is obtained, and
(c) of crystallization of said whey or permeate resulting from the preceding operations, and depleted in multivalent inorganic anions, in organic acid anions and in multivalent cations, in order to obtain crystallized lactose and a mother liquor enriched in monovalent metal cations, this crystallization being preceded, if necessary, by an operation of concentration of said whey or permeate to the desired degree.

2. Method according to claim 1, **characterized in that** it further comprises an operation:
(d) of chromatography of at least a part of the mother liquor obtained during crystallization operation (c), in order to produce a lactose-enriched fraction and a raffinate enriched in monovalent metal cations and possibly in monovalent anions.

3. Method according to one of the preceding claims, **characterized in that** operation (a) of replacement of the multivalent cations comprises the processing of the whey or permeate with a cationic resin of which the counter-ion is a monovalent metal cation.

4. Method according to one of the preceding claims, **characterized in that** operation (b) of replacement of the multivalent inorganic anions and organic acid anions comprises the processing of the whey or permeate with an anionic resin of which the counter-ion is a monovalent anion non-able to form complexes with the multivalent cations.

5. Method according to claim 3, **characterized in that** the monovalent metal cation forming the counter-ion of the cationic resin is the Na⁺ or K⁺ cation.

6. Method according to claims 4 or 5, **characterized in that** the monovalent anion forming the counter-ion of the anionic resin is the Cl⁻ anion.

7. Method according to claim 3, 4, 5 or 6, **characterized in that** it further comprises the operation:
(e) of regeneration of the cationic resin and/or the anionic resin.

8. Method according to claim 7, **characterized in that** operation (e) of regeneration is performed with a fraction of the mother liquor produced during crystallization operation (c).

9. Method according to claim 7 or 8, **characterized in that** operation (e) of regeneration is performed with a raffinate produced during chromatography operation (d).

10. Method according to any one of claims 7 to 9, **characterized in that** operation (e) of regeneration is performed in series or in parallel on the anionic resin and cationic resin.

## Patentansprüche

1. Verfahren zur Herstellung von Laktose aus Molke oder einem Molkenultrafiltrationspermeat, wobei diese Molke und dieses Permeat monovalente Kationen Na⁺ und K⁺, monovalente Anionen Cl⁻, polyvalente Kationen Ca²⁺ und Mg²⁺ und polyvalente mineralische Anionen, wie beispielsweise Phosphatanionen und/oder Anionen von organischen Säuren, umfassen, die Komplexe mit den polyvalenten Kationen bilden können, wie beispielsweise Laktat und Citrat, **dadurch gekennzeichnet, dass** es die folgenden Schritte umfasst:
a) Substitution mindestens eines Teils der polyvalenten Kationen der Molke oder des Permeats durch monovalente metallische Kationen, um eine Molke oder ein Permeat zu erhalten, die arm an polyvalenten Kationen sind,
b) Substitution mindestens eines Teils der polyvalenten mineralischen Anionen und Anionen von organischen Säuren der Molke oder des Permeats durch monovalente Anionen, die nicht in der Lage sind, Komplexe mit den polyvalenten Kationen zu bilden, wobei dieser Schritt b) entweder gleichzeitig mit Schritt a) erfolgt, in welchem Fall eine Molke oder ein Permeat entstehen, die arm an polyvalenten mineralischen Anionen, an Anionen von organischen Säuren und an polyvalenten Kationen sind, oder vor dem Schritt a) erfolgt, in welchem Fall eine Molke oder ein Permeat entstehen, die arm an polyvalenten mineralischen Anionen und an Anionen von organischen Säuren sind, und
c) Kristallisieren der Molke oder des Permeats, die aus den vorherigen Schritten entstanden und arm an polyvalenten mineralischen Anionen, an Anionen von organischen Säuren und an polyvalenten Kationen sind, um kristallisierte Laktose und Muttersirup zu erhalten, die reich an monovalenten metallischen Kationen sind, wobei diesem Kristallisieren, falls erforderlich, ein Schritt der Konzentration des Laktoserums oder Permeats auf den gewünschten Grad vorausgeht.

2. Verfahren nach Anspruch 1, **dadurch gekennzeichnet, dass** es ferner folgenden Schritt umfasst:
d) Chromatographie mindestens eines Teils des in Schritt c) des Kristallisierens erhaltenen Muttersirups, um eine mit Laktose angereicherte Fraktion und ein mit monovalenten metallischen Kationen und eventuelle mit monovalenten Anionen angereichertes Raffinat zu erhalten.

3. Verfahren nach einem der vorhergehenden Ansprüche, **dadurch gekennzeichnet, dass** der Schritt a) der Substitution der polyvalenten Kationen die Behandlung der Molke oder des Permeats mit einem kationischen Harz umfasst, dessen Gegen-Ion ein monovalentes metallisches Kation ist.

4. Verfahren nach einem der vorhergehenden Ansprüche, **dadurch gekennzeichnet, dass** der Schritt b) des Substituierens der polyvalenten mineralischen Anionen und Anionen von organischen Säuren die Behandlung der Molke oder des Permeats mit einem anionischen Harz umfasst, dessen Gegen-Ion ein monovalentes Anion ist, das nicht in der Lage ist, Komplexe mit den polyvalenten Kationen zu bilden.

5. Verfahren nach Anspruch 3, **dadurch gekennzeichnet, dass** das monovalente metallische Kation, das das Gegen-Ion des kationischen Harzes bildet, das Kation Na⁺ oder K⁺ ist.

6. Verfahren nach Anspruch 4 oder 5, **dadurch gekennzeichnet, dass** das monovalente Anion, das das Gegen-Ion des anionischen Harzes bildet, das Anion Cl⁻ ist.

7. Verfahren nach Anspruch 3, 4, 5 oder 6, **dadurch gekennzeichnet, dass** es ferner folgenden Schritt umfasst:
e) Regenerieren des kationischen Harzes und/oder des anionischen Harzes.

8. Verfahren nach Anspruch 7, **dadurch gekennzeichnet, dass** der Schritt e) des Regenerierens mit Hilfe einer Fraktion des Muttersirups erfolgt, der in Schritt c) des Kristallisierens erzeugt wurde.

9. Verfahren nach Anspruch 7 oder 8, **dadurch gekennzeichnet, dass** der Schritt e) des Regenerierens mit Hilfe des Raffinats erfolgt, das in Schritt d) der Chromatographie erzeugt wurde.

10. Verfahren nach einem der Ansprüche 7 bis 9, **dadurch gekennzeichnet, dass** der Schritt e) des Regenerierens hintereinander oder parallel am anionischen und am kationischen Harz erfolgt.
